# EUROPÄISCHE PATENTSCHRIFT

(11) **EP 3 804 121 B1**
(45) Veröffentlichungstag und Bekanntmachung des Hinweises auf die Patenterteilung: **02.10.2024**
(21) Anmeldenummer: 19719191.9
(22) Anmeldetag: 11.04.2019
(51) Int. Cl.: H02S 20/32, F24S 30/425, F24S 25/10, H02S 20/10

(54) **SOLARANLAGE MIT VERSCHWENKBAREM UND FESTSTELLBAREM MODULTISCH**
SOLAR INSTALLATION HAVING PIVOTABLE AND LOCKABLE MODULE TABLE
INSTALLATION SOLAIRE AYANT UN TABLE DE MODULES PIVOTANTES ET FIXABLES

(30) Priorität: 30.05.2018 DE 202018103053 U
(43) Veröffentlichungstag der Anmeldung: 14.04.2021
(73) Patentinhaber: IDEEMATEC Deutschland GmbH, 94574 Wallerfing (DE)
(72) Erfinder: KUFNER, Johann, 94527 Aholming (DE); KERMELK, Nathalie, 94501 Aidenbach (DE); BIRR, Peter, 94371 Rattenberg (DE); BAUER, Benjamin, 94562 Oberpöring (DE); REHM, Ronny, 94486 Osterhofen (DE)
(74) Vertreter: advotec.
(86) Internationale Anmeldenummer: PCT/EP2019/059300
(87) Internationale Veröffentlichungsnummer: WO 2019/228703

(56) Entgegenhaltungen:
- WO-A1-2019/179781
- WO-A1-79/00930
- DE-C- 328 666
- US-A- 2 618 187
- US-A- 4 265 555
- US-A1- 2008 066 985
- US-A1- 2010 139 645
- US-A1- 2014 174 499
- US-A1- 2014 283 894
- US-A1- 2016 365 830
- US-A1- 2018 091 088

## Beschreibung

Die vorliegende Erfindung betrifft eine Solaranlage mit mindestens einem mindestens ein, vorzugsweise eine Mehrzahl fotovoltaischer Solarmodule tragenden Modultisch, welcher um mindestens eine Achse verschwenkbar ist.

Derartige Solaranlagen sind aus dem Stand der Technik beispielsweise als sogenannte Horizontaltracker bekannt. Durch die Tatsache, dass die Modultische derartiger Solaranlagen verschwenkbar ausgebildet sind, können sie dem Sonnenverlauf nachgeführt werden, sodass stets eine optimale Sonneneinstrahlung im Tagesverlauf gewährleistet ist.

Die meisten sogenannten Horizontaltracker sind auf einem Rohr aufgebaut, das mittig von einem Getriebe gehalten wird. Durch die Rotation des Rohres um dessen Längsachse wird eine Verschwenkung der Modultische und damit der Solarmodule bewerkstelligt. Die Gesamtlänge eines Tisches beträgt in der Regel bis zu 80 Meter. Bei einer derartigen Gesamtlänge eines Modultisches beträgt die Gesamtlänge eines Seitenflügels, welcher sich vom rotierenden Rohr bis zum freien Ende des Tisches erstreckt, also ca. 40 Meter.

Bei den Solaranlagen aus dem Stand der Technik besteht ein großes Problem darin, dass die Modultische bei auftretender Windlast unkontrolliert verschwenken. Windkanalversuche der Anmelderin haben ergeben, dass sich bei einer Neigungsänderung um 5 Grad des ursprünglich waagerechten Modultisches die Belastung um das Doppelte erhöht.

Hierbei kommt es oftmals zu einem gefährlichen Aufschaukeln unter der Windlast, dem sogenannten Galloping-Effect.

Um dieses Problem in den Griff zu bekommen, wurden Tracker-Systeme entwickelt, die durch Wind entstehende Schwingungen mit hydraulischen Dämpfern oder ähnlichen Hilfskonstruktionen auszugleichen versuchen. Dies hat sich jedoch nur als bedingt geeignet erwiesen, um die o. g. Nachteile zu beheben. Zudem sind derartige Konstruktionen sehr aufwändig in der Montage und damit auch kostenintensiv.

US 2018 / 0 091 088 A1 beschreibt eine Solaranlage mit einer Antriebswelle zum Antreiben und Verschwenken eines mit einem Modultisch gekoppelten Zahnradelements. In die Antriebswelle dieser Solaranlage ist ein Betätigungselement in Form eines Zahnradgetriebes integriert, durch welches das Zahnradelement sowohl angetrieben als auch blockiert werden kann. Ein Blockieren dieses Zahnradelements wird durch einen relativ komplizierten Mechanismus realisiert. Hierzu weißt das in der genannten Druckschrift beschriebene System ein speziell geformtes Absperrblech auf, welches am Zahnradelement befestigt ist. Somit bilden das Zahnradgetriebe und das Absperrbleck einen Schließmechanismus.

Der vorliegenden Erfindung liegt die Aufgabe zugrunde, eine Solaranlage der eingangs genannten Art zur Verfügung zu stellen, welche die oben beschriebenen Nachteile aus dem Stand der Technik überwindet. Der Erfindung liegt insbesondere die Aufgabe zugrunde, eine Solaranlage zur Verfügung zu stellen, bei welcher ein windbedingtes Aufschaukeln der Modultische weitestgehend verhindert wird.

Diese Aufgabe wird erfindungsgemäß durch eine Solaranlage nach Anspruch 1 gelöst, deren Modultisch mit mindestens einem um eine Achse verschwenkbaren Zahlradelement derart gekoppelt ist, dass eine Verschwenkung des Zahnradelements eine Verschwenkung des Modultisches bewirkt, um die Solarmodule dem Sonnenverlauf nachzuführen, wobei das Zahnradelement durch eine elektrisch angetriebene Antriebswelle angetrieben und damit verschwenkt wird, wobei in die Antriebswelle mindestens ein Betätigungselement integriert ist, durch welches das Zahnradelement sowohl angetrieben als auch blockiert werden kann. Die erfindungsgemäße Solaranlage ist dadurch gekennzeichnet, dass das Betätigungselement zum Antreiben bzw. Blockieren des Zahnradelements in die Verzahnung des Zahnradelements eingreift.

Mit Hilfe des in die Antriebswelle integrierten Betätigungselements ist es also möglich, den Modultisch sowohl zu verschwenken als auch festzustellen und somit vor einem Verschwenken bei Windlast zu schützen. Durch eine Rotation der Antriebswelle um deren Längsachse kommt es zu einem Verschwenken (Betätigen) des Zahnradelements, indem das Betätigungselement in die Verzahnung des Zahnradelements eingreift und dieses antreibt (verschwenkt). Soll nun ein weiteres Verschwenken des Modultisches (beispielsweise bei aufkommendem Wind) verhindert werden, wird die Rotationsbewegung der Antriebswelle eingestellt, sodass diese still steht. Um nun den Modultisch zu blockieren, verharrt das Betätigungselement bei einem Feststellen der Antriebswelle in der Verzahnung des Zahnradelements und verhindert dadurch eine weitere Verschwenkung des Zahnradelements und dadurch eine Verschwenkung des gesamten Modultisches (beispielsweise bei aufkommender Windlast).

Mit Vorteil handelt es sich bei dem Zahnradelement um ein Zahnradsegment. Ein derartiges Zahnradsegment weist einen Kreisbogen auf, welcher die Verzahnung des Zahnradsegments trägt. Die dem Kreisbogen gegenüberliegende Seite des Zahnradsegments wird in der Regel direkt oder über ein Verbindungselement mit dem zu verschwenkenden Modultisch verbunden. Das Verbindungselement kann beispielsweise ein Querjoch eines Modultisches bzw. eines Modulgestells sein.

Bei der Ausführungsform der erfindungsgemäßen Solaranlage weist das Betätigungselement mindestens zwei, im Wesentlichen parallel zueinander angeordnete Betätigungsstifte auf, welche zum Antreiben (Verschwenken) bzw. Blockieren des Zahnradelements in die Verzahnung des Zahnradelements eingreifen, wobei sich die Betätigungsstifte zum Blockieren des Zahnradelements vorzugsweise beide jeweils in einer unterschiedlichen Zahnlücke, insbesondere in benachbarten Zahnlücken des Zahnradelements befinden und dort verharren. Eine derartige Ausfiihrungsform des Betätigungselements ist äußert einfach in der Herstellung und gleichzeitig ideal sowohl zum Antreiben als auch Blockieren des Zahnradelements geeignet. Befinden sich beide Betätigungsstifte bewegungslos in jeweils einer Zahnlücke des Zahnradelements ist ein weiteres Verschwenken des Zahnradelements nicht mehr möglich. Dadurch wird auch ein Aufschaukeln des Modultisches bei Windlast verhindert.

Das Betätigungselement kann beispielsweise als eckiger oder runder Ring oder Rahmen vorliegen. Eine derartige Ausfuhrungsform des Betätigungselements ist äußerst einfach in der Herstellung und effektiv in der Anwendung.

Mit Vorteil ist der mindestens eine Modultisch auf dem mindestens einen Zahnradelement gelagert. Dies kann direkt oder indirekt über ein Verbindungselement erfolgen.

Vorzugsweise erstreckt sich die Längsachse der Antriebswelle, um welche diese rotiert, durch die Verzahnung des mindestens einen Zahnradelements. Bei einer derartigen Ausführungsform lässt sich ein Blockieren des Zahnradelements durch ein bloßes Stillstehen der Antriebswelle erreichen, indem das Betätigungselement in die Verzahnung des Zahnradelements eingreift.

Mit Vorteil weist die erfindungsgemäße Solaranlage Vertikalpfosten zur Aufständerung des mindestens einen Modultisches auf, welche zumindest teilweise Haltebleche zum Halten der Antriebswelle aufweisen. Durch derartige Haltebleche werden auftretende Lasten von der Antriebswelle direkt in die Vertikalpfosten und damit in das Fundament geleitet.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: Eine schematische Darstellung einer erfindungsgemäßen Solaranlage;
- Fig. 2:: eine perspektivische Darstellung eines Ausschnittes aus der Solaranlage von Fig. 1 im Bereich eines Zahnradelements;
- Fig. 3:: einen vergrößerten Ausschnitt aus Fig. 2 im Bereich des Betätigungselements der Antriebswelle;
- Fig. 4a-4c:: eine Seitenansicht der Solaranlage von Fig. 1 im Tagesverlauf;
- Fig. 5:: eine Draufsicht auf ein Zahnradelement und ein Betätigungselement der Antriebswelle der Solaranlage von Fig. 1;
- Fig. 6a-6b:: einen Querschnitt durch ein Betätigungselement der Antriebswelle der Solaranlage von Fig. 1.

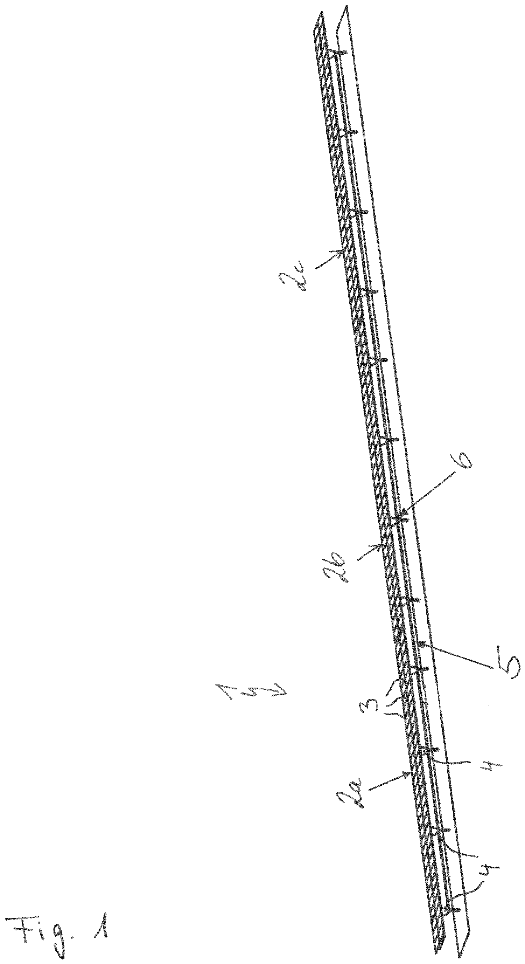

Figur 1 zeigt eine Solaranlage 1 mit drei Modultischen 2a, 2b, 2c. Jeder der drei Modultische 2a bis 2c trägt eine Mehrzahl von fotovoltaischen Solarmodulen 3. Jeder der drei Modultische 2a bis 2c ist jeweils mit vier Zahnradelementen in Form von Zahnradsegmenten 4 gekoppelt. Diese Kopplung zwischen Modultischen 2a bis 2c und den Zahnradsegmenten 4 bewirkt, dass eine Verschwenkung der Zahnradsegmente 4 eine Verschwenkung der Modultische 2a bis 2c bewirkt, um die einzelnen Solarmodule 3 dem Sonnenverlauf nachzufuhren. Die Zahnradsegmente 4 werden durch eine elektrisch angetriebene Antriebswelle 5 angetrieben und damit verschwenkt. Die Antriebswelle 5 wird durch eine Getriebeeinheit 6 angetrieben und treibt alle drei Modultische 2a bis 2c an.

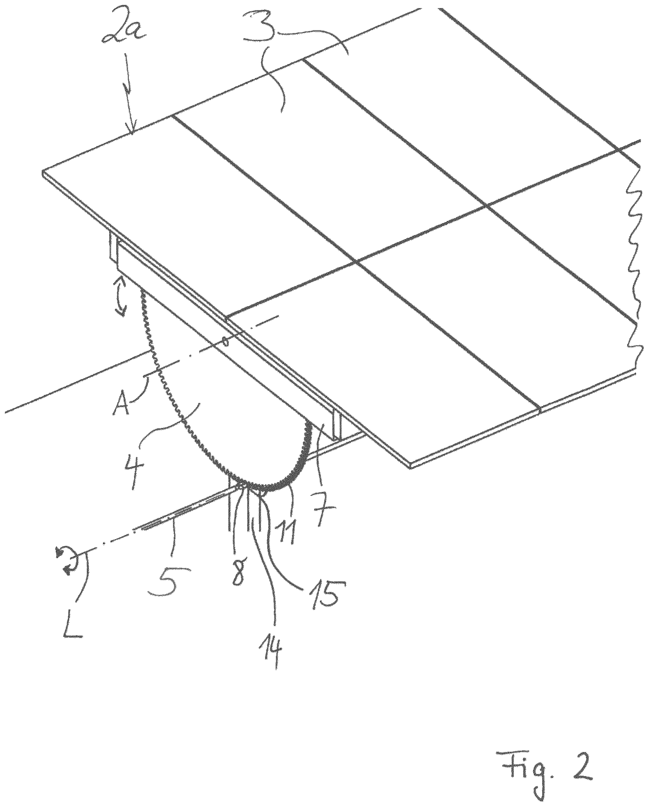

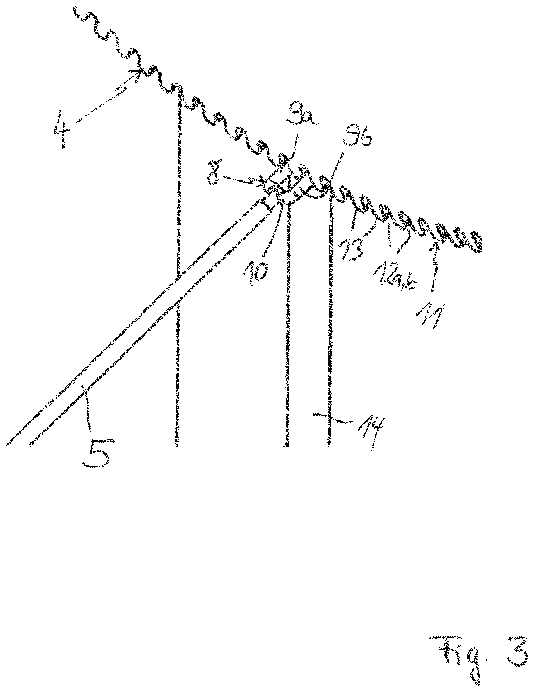

Figuren 2 und 3 zeigen einen Ausschnitt aus der Solaranlage 1 im Bereich eines Zahnradsegments 4. Um hier die entscheidenden Elemente erkennen zu können, wurden die sich an die gezeigten Solarmodule 3 anschließenden Solarmodule weggelassen. Wie in Fig. 2 gut zu erkennen ist, ist das Zahnradsegment 4 an einem Querjoch 7 befestigt, welches der Querverstrebung des hier gezeigten Modultisches 2a dient. Das Zahnradsegment 4 ist in diesem Falle mit dem Querjoch 7 verschraubt. Das Zahnradsegment 4 und damit auch das Querjoch 7 sind um die Querachse A des Querjochs 7 verschwenkbar. Ein Verschwenken des Zahnradsegments 4 bzw. des Querjochs 7 führt unweigerlich zu einem Verschwenken des Modultisches 2a, da das Querjoch 7 integraler Bestandteil des Modultisches 2a ist. Die möglichen Rotationsbewegungen der Antriebswelle 5 sowie die Schwenkbewegungen des Zahnradsegments 4 und damit des Modultisches 2a sind durch entsprechende Pfeile angedeutet.

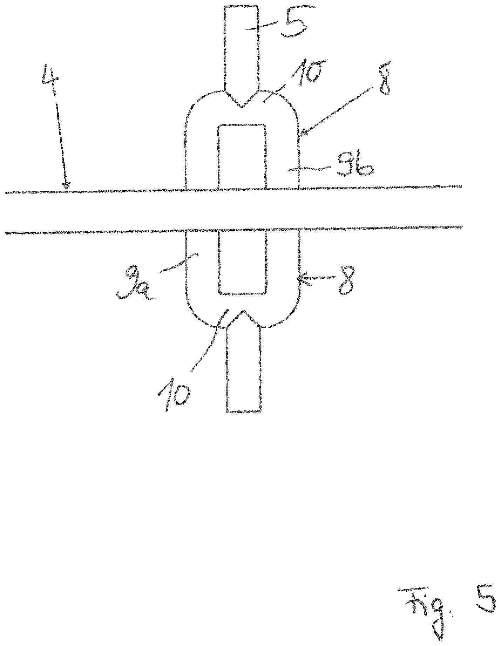

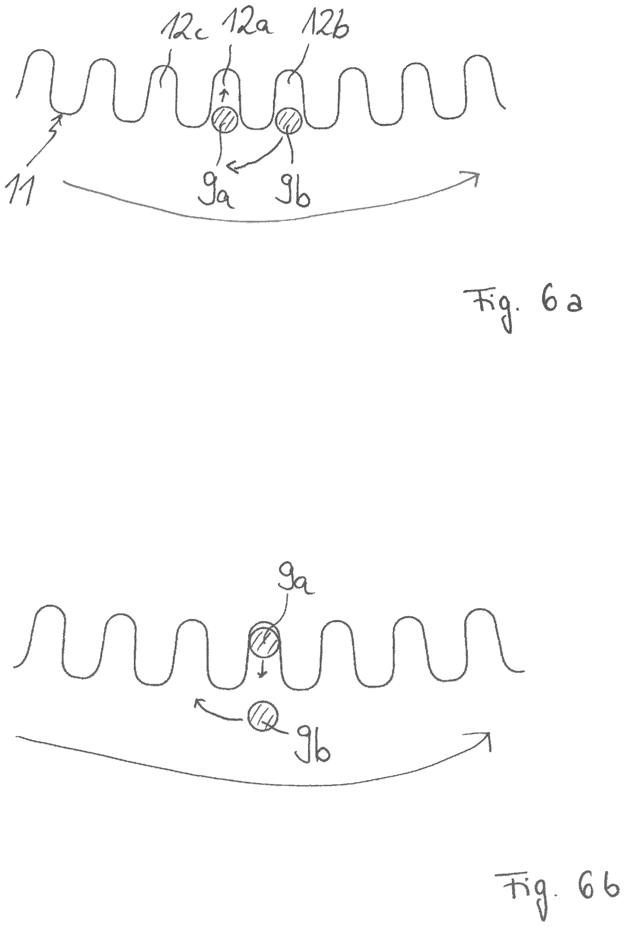

Wie in den Figuren 2 und 3 gut zu erkennen ist, ist in die Antriebswelle 5 ein Betätigungselement 8 integriert. Das Betätigungselement 8 ist auch in den Figuren 5, 6a und 6b vergrößert dargestellt. Das Betätigungselement 8 ist im vorliegenden Ausführungsbeispiel als eine Art länglicher Rahmen mit zwei parallel zueinander angeordneten Betätigungsstiften 9a, 9b ausgebildet. Die Betätigungsstifte 9a und 9b sind einstückig über zwei Verbindungsabschnitte 10 miteinander verbunden. Beim Antreiben (Verschwenken) des Modultisches 2a rotiert die Antriebswelle 5 um ihre Längsachse L. Die Betätigungsstifte 9a und 9b sind derart zueinander beabstandet angeordnet, dass sie in die Verzahnung 11 des Zahnradsegments 4 eingreifen und das Zahnradsegment 4 durch die Rotationsbewegung der Antriebswelle zum Rotieren (Verschwenken) bringen können. Je nachdem, ob die Antriebswelle 5 im Uhrzeigersinn oder gegen den Uhrzeigersinn rotiert, wird auch der Modultisch 2a in die eine oder andere Richtung verschwenkt. Das Zusammenwirken zwischen dem Betätigungselement 8 und der Verzahnung 11 des Zahnradsegments 4 ist in den Figuren 6a und 6b noch einmal genauer illustriert. In Figur 6a befinden sich beide Betätigungsstifte 9a und 9b in jeweils einer Zahnlücke 12a, 12b der Verzahnung 11. Die Zahnlücken 12a und 12b sind benachbart zueinander angeordnet. Mit dem Bezugszeichen 13 sind die Zähne der Verzahnung 11 gekennzeichnet. Bei den in den Figuren 6a und 6b dargestellten Situationen rotiert die Antriebswelle 5 im Uhrzeigersinn. Bei dieser Rotationsbewegung verlässt der Betätigungsstift 9b die Zahnlücke 12b und wird durch die Rotationsbewegung der Antriebswelle zunächst so verschwenkt, dass sich dieser direkt unterhalb der Zahnlücke 12a befindet (siehe kleiner Pfeil). Der Betätigungsstift 9a wandert gleichzeitig tiefer in die Zahnlücke 12a. Diese Situation ist in Figur 6b gezeigt. Im weiteren Verlauf wird nun der Betätigungsstift 9b weiter in Richtung der Zahnlücke 12c verschwenkt. Gleichzeitig wird der Betätigungsstift 9a weiter aus der Zahnlücke 12a bewegt. Durch diese Rotationsbewegung der Antriebswelle und damit des Betätigungselements 8 in Richtung des Uhrzeigersinns wird das Zahnradsegment 4 entgegen dem Uhrzeigersinn rotiert bzw. verschwenkt (siehe großer Pfeil). Im weiteren Verlauf wird nun der Betätigungsstift 9a im selben Modus wie vorher der Betätigungsstift 9b bewegt. Darauf folgt wiederum dieselbe Bewegung des Betätigungsstiftes 9b usw..

Wird nun die Rotationsbewegung der Antriebswelle eingestellt, verbleibt mindestens einer der beiden Betätigungsstifte 9a, 9b in einer Zahnlücke der Verzahnung 11. Dadurch wird das Zahnradsegment 4 blockiert, sodass keine Verschwenkung bzw. Rotation des Zahnradsegmentes mehr möglich ist. Wird die Solaranlage 1 höheren Windlasten ausgesetzt und besteht dadurch die Gefahr eines Aufschaukelns der Modultische 2a bis 2c wird die Antriebswelle 5 festgestellt, sodass mindestens ein Betätigungsstift 9a, 9b der jeweiligen Betätigungselemente 8 in der Verzahnung 11 der jeweiligen Zahnradsegmente 4 verharren. Die optimale Stellung eines Betätigungselements 8 beim Blockieren eines Zahnradsegmentes 4 ist in Figur 6a dargestellt, nämlich dann, wenn sich beide Betätigungsstifte 9a und 9b in einer Zahnlücke 12a, 12b befinden. In dieser Stellung wird eine besonders stabile Blockierung des Zahnradsegments 4 und damit des gesamten Modultisches 2a erreicht.

Um bei einem Auftreten hoher Windlasten unverzüglich eine derartige Sperrstellung erreichen zu können, kann die Antriebswelle beispielsweise mit einem Windfühler gekoppelt sein. Dieser Windfühler kann dann bei einem Auftreten hoher Windlasten ein Feststellen der Antriebswelle 5 in der in Figur 6a gezeigten Position veranlassen.

Wie in Figur 1 zu sehen ist, werden alle drei Modultische 2a bis 2c durch dieselbe Antriebswelle 5 angetrieben. Jeder der drei Modultische 2a bis 2c ist mit jeweils vier Zahnradsegmenten 4 gekoppelt. Um alle zwölf Zahnradsegmente der gezeigten Solaranlage 1 betätigen zu können, weist auch die Antriebswelle 5 insgesamt zwölf Betätigungselemente 8 auf. Durch diese Bauweise wird gewährleistet, dass alle drei Modultische 2a bis 2c simultan verschwenkt oder - bei Bedarf - festgestellt (blockiert) werden können. In der vorliegenden Darstellung werden drei Modultische 2a bis 2c durch eine einzige Antriebswelle 5 bewegt. Es kann sogar eine Vielzahl von Modultischen über eine einzige Antriebswelle bewegt werden.

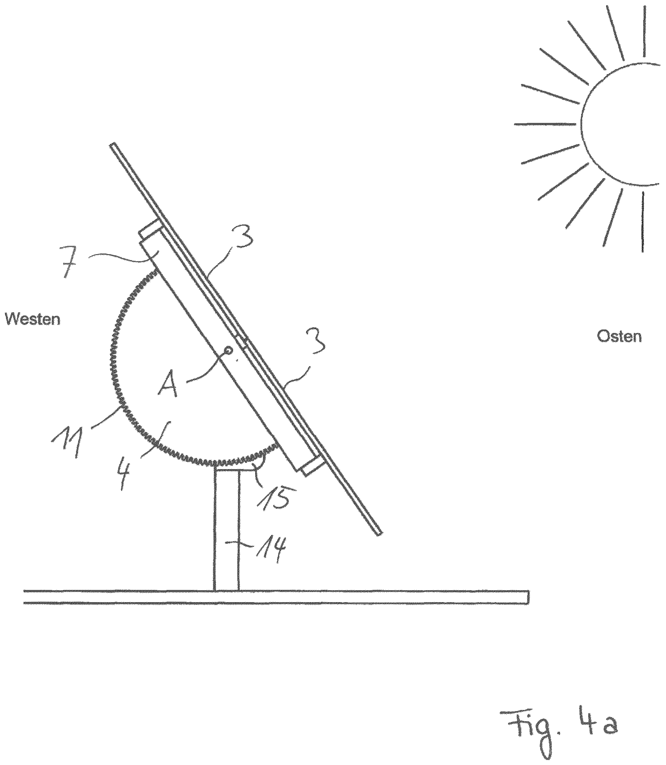

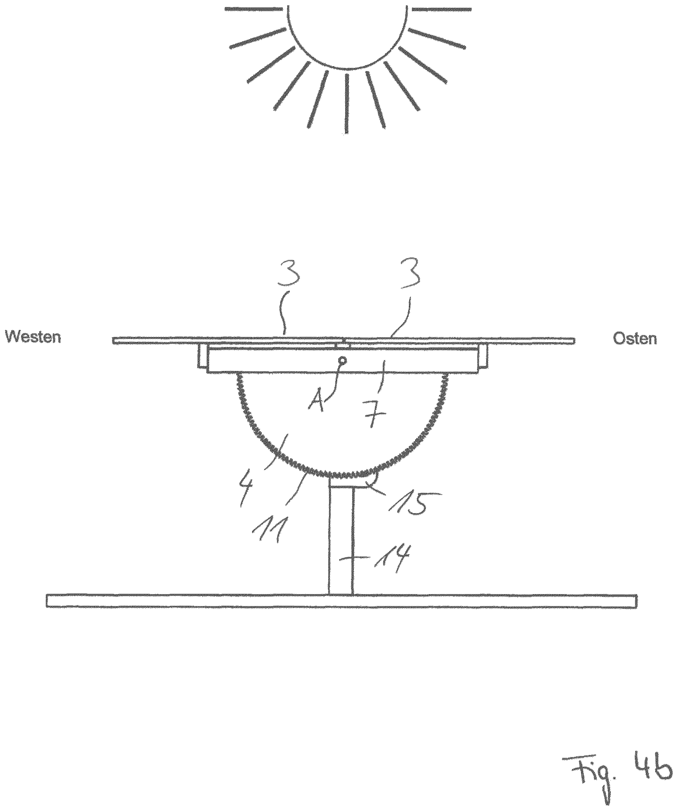

In den Figuren 4a bis 4c ist dargestellt, wie die Solaranlage 1 im Tagesverlauf der Sonne nachgeführt wird. In der Figur 4a ist die Situation am Morgen dargestellt. Um die Solarmodule 3 von der Morgenstellung allmählich in die Mittagstellung (siehe Figur 4b) zu verbringen, wird die Antriebswelle 5 im Uhrzeigersinn gedreht. Dadurch kommt es zu einem Verschwenken des Modultisches von der in Figur 4a dargestellten Ausgangslage in eine horizontale Stellung (Mittagstellung). Während die Antriebswelle 5 also im Uhrzeigersinn rotiert, schwenkt bzw. rotiert das Zahnradsegment 4 entgegen dem Uhrzeigersinn.

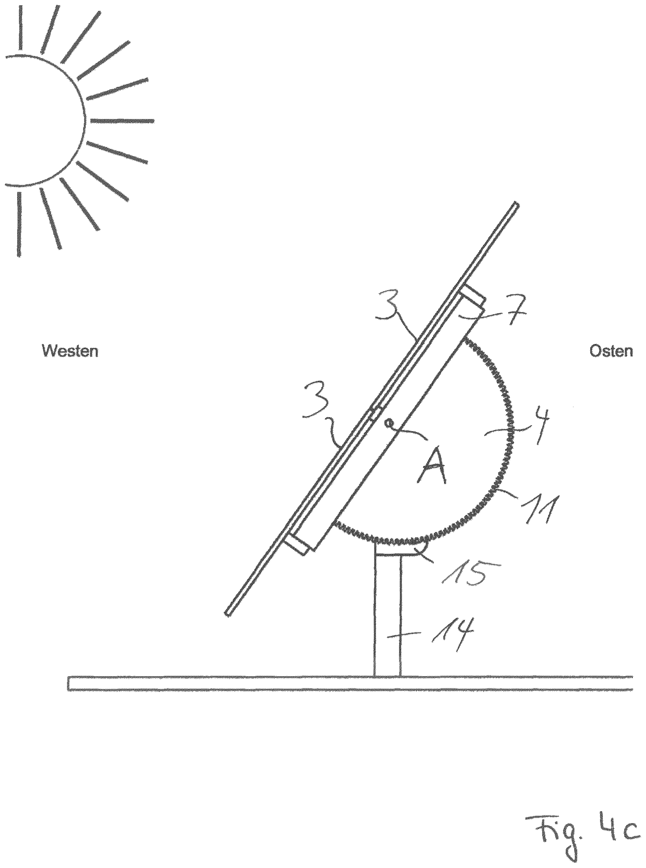

Eine weitere Rotation der Antriebswelle 5 im Uhrzeigersinn führt letztlich dazu, dass die Modultische bzw. Solarmodule 3 in der in Figur 4c gezeigten Abendstellung ankommen.

Sollen die Modultische bzw. Solarmodule 3 von der Abendstellung wieder zurück in die Mittag- bzw. Morgenstellung überführt werden, muss die Antriebswelle 5 jetzt entgegen dem Uhrzeigersinn bewegt werden. Durch eine derartige Rotation der Antriebswelle 5 kommt es zu einem Verschwenken bzw. Rotieren des Zahnradsegments 4 und somit des damit gekoppelten Modultisches im Uhrzeigersinn.

Bei der gezeigten Ausführungsform sind die Zahnradsegmente 4 sowie die Antriebswelle 5 mit den Betätigungselementen 8 aus Stahl gefertigt.

Wie insbesondere in den Figuren 6a und 6b gut zu erkennen ist, erstreckt sich die Längsachse L der Antriebswelle 5 durch die Verzahnung 11 des Zahnradsegments 4. Dies hat den Vorteil, dass die Lage der Längsachse L der Antriebswelle 5 nicht verändert werden muss, um das Betätigungselement zur Erreichung einer optimalen Blockierung des Zahnradsegments 4 in die in Figur 6a gezeigte Stellung zu verbringen.

Wie in Figur 1 zu erkennen ist, weist die Solaranlage 1 Vertikalpfosten 14 zur Aufständerung der Modultische 2a bis 2c auf. Die Anzahl dieser Vertikalpfosten 14 entspricht vorliegend der Anzahl der Zahnradsegmente 4. Die Vertikalpfosten 14 sind auch alle im Bereich der Zahnradsegmente 4 angeordnet.

Wie insbesondere in den Figuren 2, 3 sowie 4a bis 4c zu erkennen ist, sind an den Vertikalpfosten 14 Haltebleche 15 angeordnet. Diese Haltebleche 15 dienen zum Halten der Antriebswelle 5, welche die Haltebleche 15 durchgreift. Die Haltebleche 15 nehmen Kräfte auf, welche auf die Antriebswelle 5 einwirken und leiten diese in das Fundament in Form der Vertikalpfosten 14 ab. Die genannten Kräfte sind insbesondere solche Kräfte, welche durch hohe Windlasten entstehen und dabei von den Zahnradsegmenten 4 auf die Antriebswelle 5 übertragen werden. Bei feststehender Antriebswelle 5 ist die Stabilität der gesamten Anlage 1 mit einer fest aufgeständerten Solaranlage vergleichbar. Damit können auch sehr hohe Windlasten ohne Beschädigungen der Solaranlage 1 auf diese einwirken.

Es versteht sich, dass die in den Zeichnungen gezeigten Elemente der erfindungsgemä-ßen Solaranlage 1 auch anders ausgebildet sein können. So ist es denkbar, dass das Betätigungselement aus zwei Blechen, z. B. scheibenförmigen Blechen aufgebaut ist, welche über zwei parallel zueinander angeordnete Befestigungsstifte verbunden sind. Die beiden Bleche können dann beispielsweise mit jeweils einem Ende eines Antriebswellenabschnitts verschweißt sein.

### Bezugszeichenliste

- 1: Solaranlage
- 2a-2c: Modultische
- 3: Solarmodule
- 4: Zahnradsegmente
- 5: Antriebswelle
- 6: Getriebeeinheit
- 7: Querjoch
- 8: Betätigungselement
- 9a, 9b: Betätigungsstifte
- 10: Verbindungsabschnitte
- 11: Verzahnung
- 12a-12c: Zahnlücken
- 13: Zähne
- 14: Vertikalpfosten
- 15: Haltebleche
- A: Querachse
- L: Längsachse

## Patentansprüche

1. Solaranlage (1) mit mindestens einem mindestens ein, vorzugsweise eine Mehrzahl fotovoltaischer Solarmodule (3) tragenden, verschwenkbaren Modultisch (2a, 2b, 2c), welcher mit mindestens einem um eine Achse (A) verschwenkbaren Zahnradelement (4) derart gekoppelt ist, dass eine Verschwenkung des Zahnradelements (4) eine Verschwenkung des Modultisches (2a bis 2c) bewirkt, um die Solarmodule (3) dem Sonnenverlauf nachzuführen, wobei das Zahnradelement (4) durch eine elektrisch angetriebene Antriebswelle (5) angetrieben und damit verschwenkt wird, wobei in die Antriebswelle (5) mindestens ein Betätigungselement (8) integriert ist, durch welches das Zahnradelement (4) sowohl angetrieben als auch blockiert werden kann, wobei das Betätigungselement (8) zum Antreiben bzw. Blockieren des Zahnradelements (4) in die Verzahnung (11) des Zahnradelements (4) eingreift, **dadurch gekennzeichnet, dass** das Betätigungselement (8) mindestens zwei, im Wesentlichen parallel zueinander angeordnete Betätigungsstifte (9a, 9b) aufweist, welche zum Antreiben (Verschwenken) bzw. Blockieren des Zahnradelements (4) in die Verzahnung (11) des Zahnradelements (4) eingreifen, wobei sich beide Betätigungsstifte (9a, 9b) zum Blockieren des Zahnradelements (4) jeweils in einer Zahnlücke, insbesondere in benachbarten Zahnlücken (12a, 12b, 12c) der Verzahnung (11) des Zahnradelements (4) befinden und dort verharren.

2. Solaranlage nach Anspruch 1, **dadurch gekennzeichnet, dass** es sich beim Zahnradelement um ein Zahnradsegment (4) handelt.

3. Solaranlage nach einem der vorhergehenden Ansprüche, **dadurch gekennzeichnet, dass** das Betätigungselement (8) als eckiger oder runder Ring oder Rahmen vorliegt.

4. Solaranlage nach einem der vorhergehenden Ansprüche, **dadurch gekennzeichnet, dass** der mindestens eine Modultisch (2a, 2b, 2c) auf dem mindestens einen Zahnradelement (4) gelagert ist.

5. Solaranlage nach einem der vorhergehenden Ansprüche, **dadurch gekennzeichnet, dass** sich die Längsachse (L) der Antriebswelle (5), um welche diese rotiert, durch die Verzahnung (11) des mindestens einen Zahnradelements (4) erstreckt.

6. Solaranlage nach einem der vorhergehenden Ansprüche, **dadurch gekennzeichnet, dass** sie Vertikalpfosten (14) zur Aufständerung des mindestens einen Modultisches (2a, 2b, 2c) aufweist, welche zumindest teilweise Haltebleche 15 zum Halten der Antriebswelle (5) aufweisen.

## Claims

1. A solar plant (1) having at least one pivotable module table (2a, 2b, 2c) which supports at least one photovoltaic solar module (3), preferably multiple photovoltaic solar modules (3), and is coupled in such a manner to at least one gear element (4) pivotable about an axis (A) that pivoting the gear element (4) causes the module table (2a to 2c) to be pivoted so that the solar modules (3) track the motion of the sun, the gear element (4) being driven and thus pivoted by an electrically driven drive shaft (5), at least one actuation element (8) being integrated in the drive shaft (5), the gear element (4) being both driven and blocked by the actuation element (8), the actuation element (8) engaging into the toothing (11) of the gear element (4) for driving or blocking the gear element (4), **characterized in that** the actuation element (8) comprises at least two actuation pins (9a, 9b) which are disposed essentially parallel to each other and engage into the toothing (11) of the gear element (4) in order to drive (pivot) or block the gear element (4), preferably both actuation pins (9a, 9b) each resting in a tooth space, in particular in adjacent tooth spaces (12a, 12b, 12c), of the toothing (11) of the gear element (4) and remaining there for blocking the gear element (4).

2. The solar plant according to claim 1, **characterized in that** the gear element is a gear segment (4).

3. The solar plant according to any one of the preceding claims, **characterized in that** the actuation element (8) is an angular or round ring or frame.

4. The solar plant according to any one of the preceding claims, **characterized in that** the at least one module table (2a, 2b, 2c) is mounted on the at least one gear element (4).

5. The solar plant according to any one of the preceding claims, **characterized in that** the longitudinal axis (L) of the drive shaft (5), around which it rotates, extends through the toothing (11) of the at least one gear element (4).

6. The solar plant according to any one of the preceding claims, **characterized in that** the solar plant comprises vertical posts (14) for elevated mounting of the at least one module table (2a, 2b, 2c), the vertical posts (14) at least partially comprising supporting plates (15) for supporting the drive shaft (5).

## Revendications

1. Installation solaire (1) ayant au moins une table de module (2a, 2b, 2c) pivotable qui supporte au moins une module solaire (3) photovoltaïque, de préférence des modules solaires (3) photovoltaïques multiples, et qui est couplée à au moins un élément de roue dentée (4) pivotable autour d'un axe (A) de telle manière que le pivotement de l'élément de roue dentée (4) fait que la table de module (2a à 2c) est pivotée afin que les modules solaires (3) suivent le mouvement du Soleil, l'élément de roue dentée (4) étant entraîné et donc pivoté par un arbre d'entraînement (5) entraîné électriquement, au moins un élément d'actionnement (8) étant intégré dans l'arbre d'entraînement (5), l'élément de roue dentée (4) étant à la fois entraîné et bloqué par l'élément d'actionnement (8), **caractérisée en ce que** l'élément d'actionnement (8) s'engage dans les dents (11) de l'élément de roue dentée (4) afin d'entraîner ou afin de bloquer l'élément de roue dentée (4), **caractérisée en ce que** l'élément d'actionnement (8) comprend au moins deux goupilles d'actionnement (9a, 9b) qui sont disposées essentiellement en parallèle l'une à l'autre et s'engagent dans les dents (11) de l'élément de roue dentée (4) afin d'entraîner (pivoter) ou afin de bloquer l'élément de roue dentée (4), de préférence tous les deux goupilles d'actionnement (9a, 9b) chacune restant dans un espace de dents, notamment dans des espaces de dents (12a, 12b, 12c) adjacents, de dents (11) de l'élément de roue dentée (4) et y restant pour bloquer l'élément de roue dentée (4).

2. Installation solaire selon la revendication 1, **caractérisée en ce que** l'élément de roue dentée est un segment de roue dentée (4).

3. Installation solaire selon l'une quelconque des revendications précédentes, **caractérisée en ce que** l'élément d'actionnement (8) est une bague ou un cadre angulaires ou ronds.

4. Installation solaire selon l'une quelconque des revendications précédentes, **caractérisée en ce que** l'au moins une table de module (2a, 2b, 2c) est montée sur l'au moins un élément de roue dentée (4).

5. Installation solaire selon l'une quelconque des revendications précédentes, **caractérisée en ce que** l'axe longitudinal (L) de l'arbre d'entraînement (5), autour duquel il tourne, s'étende à travers les dents (11) de l'au moins un élément de roue dentée (4).

6. Installation solaire selon l'une quelconque des revendications précédentes, **caractérisée en ce que** l'installation solaire comprend des poteaux verticaux (14) pour un montage élevé de l'au moins une table de module (2a, 2b, 2c), les poteaux verticaux (14) ayant au moins partiellement des plaques de support (15) pour supporter l'arbre d'entraînement (5).
